# EUROPEAN PATENT APPLICATION

(11) **EP 4 776 336 A1**
(43) Date of publication of application: **15.07.2026**
(21) Application number: 26151155.4
(22) Date of filing: 09.01.2026
(51) Int. Cl.: H01M 4/04, H01M 4/13, H01M 4/139, H01M 4/62, H01M 10/0525

(54) **ELECTRODE FOR SECONDARY BATTERY, METHOD OF FABRICATING THE SAME AND SECONDARY BATTERY INCLUDING THE SAME**

(30) Priority: 13.01.2025 KR 20250005075
(71) Applicant: SK On Co., Ltd., Seoul 03161 (KR)
(72) Inventor: MOON, Gi Hyeon, Daejeon 34124 (KR); KIM, Hyeon A, Daejeon 34124 (KR); LEE, Jong Hyuk, Daejeon 34124 (KR)
(74) Representative: Prüfer & Partner mbB Patentanwälte · Rechtsanwälte

(57) **Abstract**

An electrode for a secondary battery, a method of fabricating the same, and a secondary battery including the same are provided. The electrode for a secondary battery includes a current collector, an active material layer disposed on the current collector. The active material layer includes an active material, and a protective coating formed on at least a portion of a surface of the active material or at least a portion of a surface of the active material layer and including an aryl-ring-containing metal compound.

## Description

### BACKGROUND

### 1. Field

Embodiments of the present disclosure relates to an electrode for a secondary battery, a method of fabricating the same, and a secondary battery including the same. More specifically, embodiments of the present disclosure relates to an electrode for a secondary battery including an active material layer, a method of fabricating the same, and a secondary battery including the same.

### 2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an electric vehicle, etc.

For example, a lithium secondary battery is being actively developed due to high operational voltage and energy density per unit weight, a high charging rate, a compact dimension, etc.

A secondary battery may include an electrode assembly including a cathode, an anode and a separation layer (separator), and an electrolyte solution impregnating the electrode assembly. The secondary battery may further include, e.g., a pouch-type exterior material that accommodates the electrode assembly and the electrolyte solution.

As charging/discharging of the secondary battery is repeated, a side reaction may occur between components of the electrolyte solution, and the cathode or the anode. For example, an electrode surface may be damaged, and gas may be generated due to an oxidation/reduction reaction between an additive included in the electrolyte solution and an active material included in the cathode or the anode.

Thus, researches on a method of reducing the side reaction with the electrolyte solution without deteriorating charge/discharge properties in the electrode are needed.

### SUMMARY

According to an aspect of the present disclosure, there is provided an electrode for a secondary battery having improved stability and charge/discharge properties.

According to an aspect of the present disclosure, there is provided a method of fabricating an electrode for a secondary battery having improved stability and charge/discharge properties.

According to an aspect of the present disclosure, there is provided a secondary battery having improved stability and charge/discharge properties.

An electrode for a secondary battery includes a current collector, an active material layer on the current collector. The active material layer includes an active material, and a protective coating covering at least a portion of a surface of the active material or at least a portion of a surface of the active material layer and including an aryl-ring-containing metal compound.

In some embodiments, the protective coating may include a compound represented by Structural Formula 1.

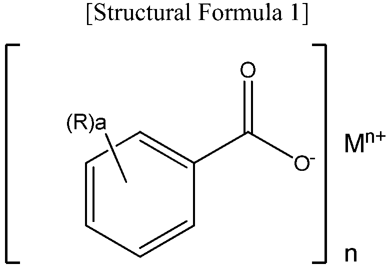

In Structural Formula 1, R is hydrogen, deuterium, -F, -Cl, -Br, -I, a hydroxyl group, a cyano group, a nitro group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₆₀ carbocyclic group, a substituted or unsubstituted C₁-C₆₀ heterocyclic group, a substituted or unsubstituted C₆-C₆₀ aryloxy group, a substituted or unsubstituted C₆-C₆₀ arylthio group, a substituted or unsubstituted C₇-C₆₀ arylalkyl group, or a substituted or unsubstituted C₂-C₆₀ heteroarylalkyl group.

In some embodiments, in Structural Formula 1, M may be an alkali metal or an alkaline earth metal, and n is 1 or 2.

In some embodiments, the active material layer may further include a binder, and the protective coating may at least partially cover surfaces of the active material and the binder exposed on an outer surface of the active material layer.

In some embodiments, the protective coating may be also present at an inside of the active material layer on a surface of the active material.

In some embodiments, the protective coating may include a first protective coating covering an outer surface of the active material layer, and a second protective coating covering the surface of the active material.

In some embodiments, the first protective coating and the second protective coating may be merged with each other at an outer portion of the active material layer.

In some embodiments, the protective coating may be in contact with a surface of the current collector.

In some embodiments, in a ¹H-NMR spectrum of a solution in which components of the protective coating is eluted from the electrode for a secondary battery, a multiplet peak in a range of 7.2 to 7.4 ppm and a doublet peak in a range of 7.6 to 7.7 ppm may be observed.

A secondary battery includes a cathode, and an anode opposing the cathode. At least one of the cathode and the anode includes the above-described electrode for a secondary battery.

In a method of fabricating an electrode for a secondary battery, a current collector is prepared. An active material layer that includes an active material and a protective coating including an aryl-ring-containing metal compound may be formed on the current collector. The protective coating is formed on an outer surface of the active material layer, or the protective coating is formed on a surface of the active material.

In some embodiments, in the formation of the protective coating on the outer surface of the active material layer, the active material layer coated on the current collector may be immersed in a coating solution including the aryl-ring-containing metal compound.

In some embodiments, a concentration of the aryl-ring-containing metal compound in the coating solution may be 0.1 wt% or more, and less than 10 wt%.

In some embodiments, in the formation of the protective coating on the surface of the active material, the active material may be mixed in a coating solution including the aryl-ring-containing metal compound before coating the active material on the current collector.

In some embodiments, the mixing the active material in the coating solution may be performed together with a vacuum drying.

In some embodiments, a concentration of the aryl-ring-containing metal compound in the coating solution may be 0.1 wt% or more, and less than 10 wt%.

An electrode for a secondary battery according to embodiments of the present disclosure includes a protective coating formed on an active material layer and/or an active material particle. The protective coating may block an oxidation/reduction reaction caused by an electron transfer between the active material layer and an electrolyte solution.

The protective coating includes an aryl ring-containing metal salt compound. The aryl ring-containing metal salt compound may selectively block the electron transfer while maintaining or enhancing a lithium ion conductivity. Thus, charge/discharge and rate properties of the secondary battery may be improved while reducing instability such as gas generation caused by side reactions of the electrolyte solution.

The secondary battery according to the above-described example embodiments may be widely applied to green technology fields including an electric vehicle, a battery charging station, photovoltaic power and wind power generation using a battery, or the like. For example, the secondary battery may be used in eco-friendly electric vehicles, hybrid vehicles, or the like, to suppress air pollution and greenhouse gas emissions, and prevent climate change.

### BRIEF DESCRIPTION OF THE DRAWINGS

FIG. 1 is a schematic cross-sectional view illustrating an electrode for a secondary battery according to example embodiments.
FIGS. 2 to 4 are schematic partially enlarged cross-sectional views illustrating an electrode for a secondary battery according to example embodiments.
FIGS. 5 and 6 are a schematic plan view and a cross-sectional view, respectively, illustrating a secondary battery according to exemplary embodiments.
FIG. 7 is a graph of an ¹H-NMR analysis of anode components of Example 1 and Comparative Example 1.

### DETAILED DESCRIPTION OF THE EMBODIMENTS

Embodiments of the present disclosure provide an electrode for a secondary battery including an active material layer and a protective coating. Further, a lithium secondary battery including the electrode for a secondary battery is provided.

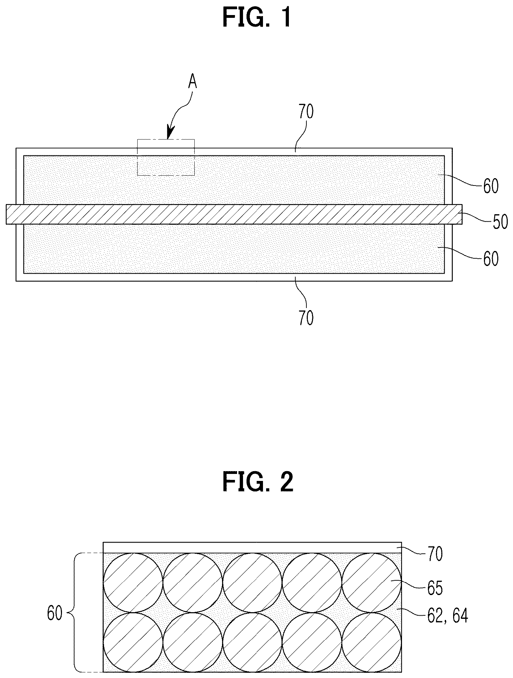

FIG. 1 is a schematic a cross-sectional view illustrating an electrode for a secondary battery according to example embodiments.

Referring to FIG. 1, an electrode for a secondary battery includes a current collector 50 and an active material layer 60 formed on the current collector 50. The electrode for a secondary battery may be a cathode or an anode.

The active material layer 60 may be formed on at least one of an upper surface and a lower surface of the current collector 50. As illustrated in FIG. 1, the active material layer 60 may be formed on each of the upper surface and the lower surface of the current collector 50.

The current collector 50 may include copper, stainless steel, nickel, aluminum, titanium, or an alloy thereof. The current collector 50 may also be surface-treated with carbon, nickel, titanium, silver, or the like. A thickness of the current collector 50 may be in a range from 5 µm to 50 µm.

When the electrode for a secondary battery is provided as the cathode, the current collector 50 may include aluminum or an aluminum alloy. When the electrode for a secondary battery is provided as the anode, the current collector 50 may include copper or a copper alloy.

The active material layer 60 may include a cathode active material or an anode active material.

The cathode active material may include a lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered structure or a crystal structure represented by Chemical Formula 1 below.

[Chemical Formula 1] LiₓNiₐM_{b}O_{2+z}

In Chemical Formula 1, 0.9≤x≤1.2, 0.5≤a≤0.99, 0.01≤b≤0.5, and -0.5≤z≤0.1. As described above, M may include Co, Mn and/or Al.

The chemical structure represented by Chemical Formula 1 represents a bonding relationship included in the layered structure or the crystal structure of the cathode active material and does not exclude an additional element. For example, M may include Co and/or Mn, and Co and Mn may be provided as main active elements of the cathode active material together with Ni. Chemical Formula 1 is provided to express the bonding relationship of the main active elements, is to be understood as a formula that encompasses introduction and substitution of the additional element.

In an embodiment, an auxiliary element may be further added to the main active elements to enhance chemical stability of the cathode active material or the layered structure/crystal structure. The auxiliary element may be incorporated in the layered structure/crystal structure to form a bond, and this case is to be understood as being included within the scope of the chemical structure represented by Chemical Formula 1.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary elements may also act as, e.g., an auxiliary active element such as Al that may contribute to capacity/power activities of the cathode active material together with Co or Mn.

For example, the cathode active material or the lithium-nickel metal oxide may include a layered structure or a crystal structure represented by Chemical Formula 1-1 below.

[Chemical Equation 1-1] LiₓNiₐM1_{b1}M2_{b2}O_{2+z}

In Chemical Formula 1-1, M1 may include Co, Mn, and/or Al. M2 may include the above-described auxiliary element. In Chemical Formula 1-1, 0.9≤x≤1.2, 0.5≤a≤0.99, 0.01≤b1+b2≤0.5, and -0.5≤z≤0.1.

The cathode active material may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The coating element or the doping element may exist on a surface of lithium-nickel metal oxide particle, or may penetrate through the surface of the lithium-nickel metal oxide particles to be included in a bonding structure represented by Chemical Formula 1 or the Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to a power and a capacity of a lithium secondary battery. Thus, as described above, a high-content (High-Ni) composition for the cathode active material may be employed, so that a high-capacity cathode and a high-capacity lithium secondary battery may be implemented.

However, as the content of Ni increases, long-term storage stability and life-span stability of the cathode or the secondary battery may be relatively degraded, and side reactions with an electrolyte solution may also be increased. However, according to example embodiments, Co may be included to maintain an electrical conductivity, and life-span stability and capacity retention properties may be improved through Mn.

In some embodiments, the content of Ni in the NCM-based lithium oxide (e.g. a mole fraction of nickel among the total number of moles of nickel, cobalt and manganese) may be 0.6 or more, 0.7 or more, 0.8 or more, 0.85 or more, 0.87 or more, or 0.90 or more. In some embodiments, the content of Ni may be in a range from 0.85 to 0.99, from 0.85 to 0.97, from 0.85 to 0.95, from 0.87 to 0.95, or from 0.90 to 0.95. In the above Ni content range, the capacity properties of the cathode and the lithium secondary battery may be improved.

In some embodiments, the cathode active material may also include a lithium cobalt oxide-based active material, a lithium manganese oxide-based active material, a lithium nickel oxide-based active material, or a lithium iron phosphate-based (LFP) active material (e.g., LiFePO₄).

In some embodiments, the cathode active material may include an LLO (Li-rich layered Oxide)/OLO (Over Lithiated Oxide)-based active material, an Mn-rich-based active material, a Co-less-based active material, or the like, having a chemical structure or a crystal structure represented by, e.g., Chemical Formula 2. These may be used alone or in a combination of two or more therefrom.

[Chemical Formula 2] p[Li₂MnO₃]·(1-p)[Li_{q}JO₂]

In Chemical Formula 2, 0<p<1, and 0.9≤q≤1.2, and J may include at least one element among Mn, Ni, Co, Fe, Cr, V, Cu, Zn, Ti, Al, Mg and B.

As the anode active material, a material known in the art capable of intercalating and deintercalating lithium ions may be used without a particular limitation. For example, a carbon-based material such as a crystalline carbon, an amorphous carbon, a carbon composite or a carbon fiber, a lithium metal, a lithium alloy, a silicon-containing material, or a tin-containing material may be used.

Examples of the amorphous carbon may include hard carbon, soft carbon, coke, a mesocarbon microbead (MCMB), a mesophase pitch-based carbon fiber (MPCF), or the like.

Examples of the crystalline carbon may include a graphite-based carbon such as natural graphite, artificial graphite, a graphitized coke, a graphitized MCMB, a graphitized MPCF.

The lithium metal may include a pure lithium metal or a lithium metal on which a protective layer for suppressing dendrite growth is formed. In an embodiment, a lithium metal-containing layer deposited or coated on an anode current collector may be used as an anode active material layer. In an embodiment, a lithium thin film layer may also be used as the anode active material layer.

Examples of an element included in the lithium alloy may include aluminum, zinc, bismuth, cadmium, antimony, silicon, lead, tin, gallium, indium, or the like.

The silicon-containing material may provide more increased capacity properties. The silicon-containing material may include Si, SiOx (0<x<2), a metal-doped SiOx (0<x<2), a silicon-carbon composite, or the like. The metal may include lithium and/or magnesium, and the metal-doped SiOx (0<x<2) may include a metal silicate.

For example, the cathode active material or the anode active material may be mixed in a solvent to prepare an electrode mixture or an electrode slurry (a cathode slurry or an anode slurry). The electrode slurry may be coated on the current collector 50, and the dried and pressed to obtain the electrode for a lithium secondary battery.

The coating process may include a gravure coating, a slot die coating, a multi-layer simultaneous die coating, an imprinting, a doctor blade coating, a dip coating, a bar coating, a casting, or the like. The electrode slurry may further include a binder and a conductive material.

Non-limiting examples of the solvent used for preparing the cathode slurry may include an organic solvent such as N-methyl-2-pyrrolidone (NMP), dimethylformamide, dimethylacetamide, N,N-dimethylaminopropylamine, ethylene oxide, tetrahydrofuran, or the like. The solvent used for preparing the anode slurry may include water, an alcohol-based solvent, or the like.

The binder may include polyvinylidenefluoride (PVDF), a vinylidene fluoride-hexafluoropropylene copolymer, polyacrylonitrile, polymethylmethacrylate, acrylonitrile-butadiene rubber (NBR), polybutadiene rubber (BR), styrene-butadiene rubber (SBR), a polyacrylic acid-based binder, a poly(3,4-ethylenedioxythiophene) (PEDOT)-based binder, or the like.

In some embodiments, a PVDF-based binder may be used as a cathode binder. In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, or the like, may be used as an anode binder.

The conductive material may be added to enhance a conductivity and/or a mobility of lithium ions or electrons. For example, non-limiting examples of the conductive material may include a carbon-based conductive material such as graphite, carbon black, acetylene black, ketjen black, graphene, carbon nanotube, a vapor-grown carbon fiber (VGCF), acarbon fiber, and/or a metal-based conductive material including tin, tin oxide, titanium oxide, a perovskite material such as LaSrCoO₃ and LaSrMnO₃, or the like.

According to embodiments of the present disclosure, an electrode for a secondary battery includes a protective coating 70. The protective coating 70 is formed on at least a portion of a surface of the active material layer 60.

The protective coating 70 may be formed on at least one of an opposing surface of the active material layer 60 to the current collector 50 and both side surfaces of the active material layer 60, and may be at least partially exposed on the surface of the active material layer 60. The opposing surface may be a surface of the active material layer 60 that faces a coating surface on the current collector 50 in a thickness direction. The side surface may be a surface connecting the opposing surface and the coating surface.

The protective coating 70 may include a material having a low electron conductivity and a high ion conductivity (e.g., a high lithium conductivity). An outer surface of the active material layer 60 may be at least partially protected by the protective coating 70, so that electron transfer between the active material layer 60 (or the electrode active material in the active material layer 60) and the electrolyte solution may be suppressed or blocked.

Accordingly, the lithium conductivity may be enhanced or maintained while suppressing an oxidation/reduction reaction through the outer surface of the active material layer 60. Thus, a lithium charge/discharge reaction may be promoted, and capacity properties of the secondary battery may be maintained even during repeated charging/discharging.

The protective coating 70 may include a material that is substantially insoluble in the electrolyte solution and has high thermal and chemical stability (oxidation/reduction stability). Additionally, the protective coating 70 may include a material having improved mechanical strength and impact resistance.

According to embodiments of the present disclosure, the protective coating 70 includes an aryl-ring-containing metal compound, and may include, e.g., a salt of an aryl-ring-containing anion and a metal cation.

In example embodiments, the protective coating 70 may include a compound represented by the following Structural Formula 1.

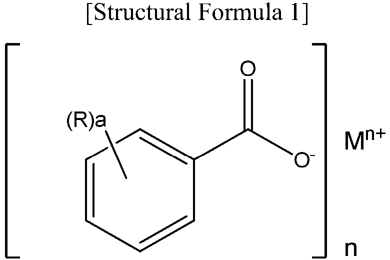

In Structural Formula 1, R may be hydrogen, deuterium, -F, -Cl, -Br, -I, a hydroxyl group, a cyano group, a nitro group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₆₀ carbocyclic group, a substituted or unsubstituted C₁-C₆₀ heterocyclic group, a substituted or unsubstituted C₆-C₆₀ aryloxy group, a substituted or unsubstituted C₆-C₆₀ arylthio group, a substituted or unsubstituted C₇-C₆₀ arylalkyl group, or a substituted or unsubstituted C₂-C₆₀ heteroarylalkyl group.

In an embodiment, R may be hydrogen or a substituted or unsubstituted C₁-C₆₀ alkyl group. In an embodiment, R may be hydrogen or a substituted or unsubstituted C₁-C₅ alkyl group.

M represents a metal element, a represents the number of R, and may be an integer from 1 to 5. n may be an integer from 1 to 4. When a is an integer from 2 to 5, a plurality of R may be the same as or different from each other.

In the present specification, "substituted or unsubstituted," unless otherwise defined, may refer to a structure substituted or unsubstituted with one or more substituent selected from the group consisting of a deuterium atom, a halogen atom, a cyano group, a nitro group, an amino group, a silyl group, a boron group, a phosphine oxide group, a phosphine sulfide group, an alkyl group, an alkenyl group, an aryl group, and a heterocyclic group. Further, each of the aforementioned substituent may be substituted or unsubstituted. For example, a biphenyl group may be interpreted as an aryl group, or may be interpreted as a phenyl group substituted with a phenyl group. The heterocyclic group includes an aliphatic heterocyclic group and an aromatic heterocyclic group (a heteroaryl group).

In an embodiment, the protective coating 70 may include a benzoate-based metal salt. In an embodiment, the protective coating 70 may include a benzoate-based alkali metal salt (n=1) such as lithium benzoate, sodium benzoate, potassium benzoate, or the like; or a benzoate-based alkaline earth metal salt (n=2) such as calcium benzoate, magnesium benzoate, or the like.

In an embodiment, the protective coating 70 may include a benzoate-based alkali metal salt.

In an embodiment, in Structural Formula 1, M may be an alkali metal other than lithium. The protective coating 70 may include a benzoate-based salt of an alkali metal other than lithium. For example, the protective coating 70 may include sodium benzoate and/or potassium benzoate.

An alkali metal having an ionic radius relatively larger than that of lithium may be used, so that a passivation effect on a surface of the active material layer 60 of the lithium secondary battery may be further enhanced. For example, generation of lithium impurities on the surface of the active material layer 60 may be suppressed, and lithium elution may be suppressed.

In an embodiment, when the protective coating 70 includes a benzoate-based alkaline earth metal salt, a plurality of benzoate groups may be distributed on the surface of the active material layer 60 to increase the electrode passivation effect.

As described above, the protective coating 70 includes an ionic bonding material, so that a stable solid thin film may be formed on the surface of the active material layer 60. Thus, high-rate charging/discharging may be promoted compared to a case of using a thickly formed polymer protective film, while reducing side reactions with the electrolyte solution. Additionally, an organic group containing an aryl ring may be included, so that solubility in the electrolyte solution may be lowered and stable electrode passivation may be provided.

Further, while suppressing the formation of a solid electrolyte interface (SEI) film generated as charging/discharging proceeds, the secondary battery may be fabricated with the protective coating 70 formed before the charging/discharging proceeds. Thus, the side reactions with the electrolyte solution due to repeated charging/discharging, high temperature, over-voltage, or the like, may be effectively suppressed while preventing electrolyte consumption.

In some embodiments, in a ¹H-NMR spectrum measured using a component of the protective coating 70 from the electrode for a secondary battery, a peak (e.g., a multiplet of a quartet or higher) in a range of 7.2 to 7.4 ppm and a peak (doublet) in a range of 7.6 to 7.7 ppm may be observed. For example, the above-described peaks may be observed in a ¹H-NMR spectrum of a solution in which the component of the protective coating 70 is eluted from the electrode for a secondary battery.

The protective coating 70 may also be formed on the current collector 50. In some embodiments, the protective coating 70 may extend continuously along a surface of the current collector 50, a side surface of the active material layer 60 and the opposing surface of the active material layer 60.

FIGS. 2 to 4 are schematic partially enlarged cross-sectional views illustrating an electrode for a secondary battery according to example embodiments. For example, FIGS. 2 to 4 are schematic partially enlarged cross-sectional views of a region A indicated in FIG. 1.

In FIGS. 2 to 4, an active material included in the active material layer 60 is represented as active material particles.

Referring to FIG. 2, the protective coating 70 may be formed on an outer surface of the active material layer 60. The protective coating 70 may be a separate coating layer directly formed on the outer surface of the active material layer 60.

In the active material layer 60, active material particles 65 may be distributed together with a binder 62. A conductive material 64 may be distributed between the active material particles 65 together with the binder 62. The protective coating 70 may be in contact with the active material particles 65, the binder 62 and the conductive material 64 exposed to the outer surface of the active material layer 60, and may at least partially cover the outer surface.

As described above, the electrode for a secondary battery may be formed by coating the electrode slurry including the active material particles 65, the binder 62 and the conductive material 64 on the current collector 50, and then drying and pressing the coated slurry.

A coating solution may be prepared by dissolving the above-described coating material for forming the protective coating 70 in a solvent. The fabricated electrode may be immersed in the coating solution, and then dried at a predetermined temperature to form the protective coating 70. In example embodiments, the active material layer 60 may be immersed in the coating solution in a state of being coated on the current collector 50.

The solvent may include water, an alcohol-based solvent such as ethanol, tetrahydrofuran (THF), dimethyl sulfoxide (DMSO), or the like.

A concentration or a content of the coating material in the coating solution may be 0.1 wt% or more, and less than 10 wt%, from 0.1 wt% to 5 wt%, from 0.5 wt% to 5 wt%, or from 1 wt% to 5 wt%. The drying temperature may be in a range from 40°C to 100°C, from 50°C to 80°C, or from 50°C to 70°C.

Under the above-described concentration and drying conditions, high-rate charging properties, initial efficiency, and rate properties of a secondary battery may not be hindered, while preventing the oxidation/reduction due to the side reactions with the electrolyte solution.

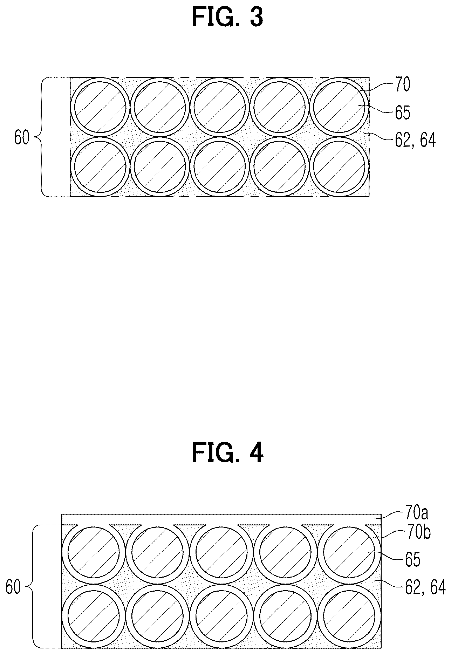

Referring to FIG. 3, the protective coating 70 may be formed on a surface of each of the active material particles 65. Accordingly, the protective coating 70 formed on the active material particles 65 that may be arranged on the outer surface of the active material layer 60 may be exposed to the outer surface.

The binder 62 and/or the conductive material 64 may be distributed between the protective coatings 70 formed on neighboring active material particles 65 at an inside of the active material layer 60.

In example embodiments, a coating solution may be prepared by mixing the above-described coating material with the solvent used in the electrode slurry. Accordingly, the active material particles 65 may be mixed into the coating solution before being coated on the current collector 50.

A concentration or a content of the coating material in the coating solution may be 0.1 wt% or more, and less than 10 wt%, from 0.1 wt% to 5 wt%, from 0.5 wt% to 5 wt%, or from 1 wt% to 5 wt%.

A coating slurry may be formed by mixing the active material particles 65 into the coating solution, and the mixture may be stirred using a mixer. A solid content in the coating slurry may be in a range from 30 wt% to 90 wt%, from 40 wt% to 85 wt%, from 40 wt% to 80 wt%, or from 50 wt% to 70 wt%.

Under the above-described coating conditions, initial efficiency and rate properties of the secondary battery may not be hindered while preventing the oxidation/reduction due to the side reactions with the electrolyte solution.

A solvent may be removed through a vacuum drying while being stirred for a predetermined time to form the protective coating 70 on surfaces of the active material particles 65.

An electrode slurry may be prepared as described above using the active material particles 65 on which the protective coating 70 is formed. The electrode slurry may be coated on the current collector 50, and then dried and pressed to fabricate an electrode for a secondary battery including the active material layer 60.

Referring to FIG. 4, the protective coating 70 may be formed on the outer surface of the active material layer 60 and on the surfaces of the active material particles 65.

The protective coating 70 may include a first protective coating 70a formed on the outer surface of the active material layer 60 and a second protective coating 70b formed on the surfaces of the active material particles 65. In some embodiments, the first protective coating 70a and the second protective coating (70b) may be substantially merged with each other at an outer portion of the active material layer 60.

In example embodiments, as described with reference to FIG. 3, the second protective coating 70b may be formed on the active material particles 65 before forming the active material layer 60. The active material particles 65 on which the second protective coating 70b is formed may be dispersed in a solvent together with the binder 62 and the conductive material 64 to fabricate the electrode slurry. The electrode slurry may be coated on the current collector 50, and then dried and pressed to form the active material layer 60.

Thereafter, as described with reference to FIG. 2, the electrode for a secondary battery including the active material layer 60 may be immersed in the coating solution and dried to form the first protective coating 70a.

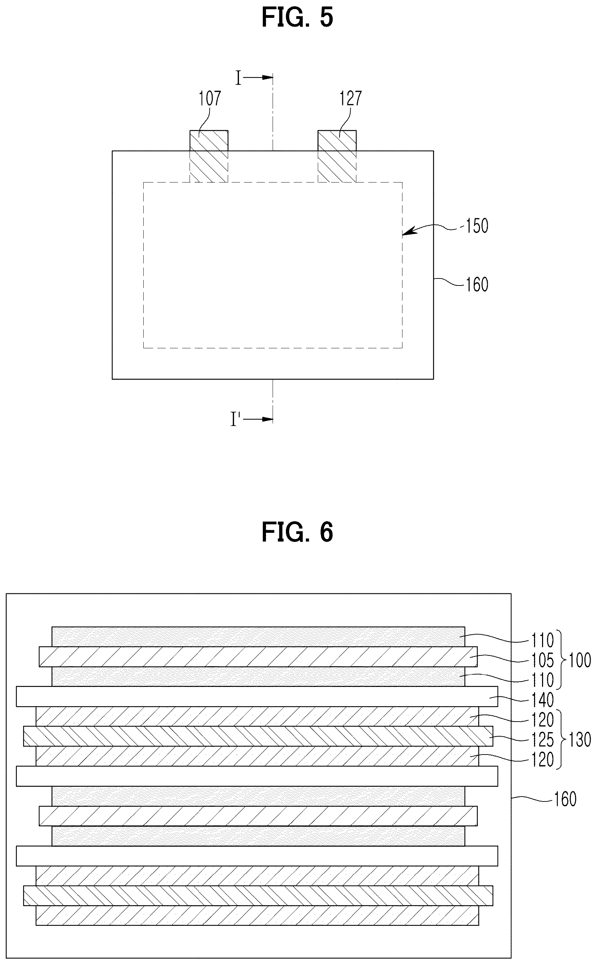

FIGS. 5 and 6 are a schematic plan view and a schematic cross-sectional view, respectively, illustrating a secondary battery according to example embodiments. For example, FIG. 6 is a cross-sectional view taken along a line I-I' of FIG. 5 in a thickness direction. In FIGS. 5 and 6, an illustration of the protective coating 70 is omitted.

FIGS. 5 and 6 provide an exemplary structure of a secondary battery for convenience of illustration, and the structure of the secondary battery of the present disclosure is not limited thereto.

Referring to FIGS. 5 and 6, a lithium secondary battery may include an electrode assembly 150 including a cathode 100 and an anode 130. The electrode assembly 150 may further include a separator 140. A plurality of the cathodes 100 and a plurality of the anodes 130 may be stacked with the separator 140 interposed therebetween to form the electrode assembly 150. The electrode assembly 150 may be accommodated in a case 160 together with an electrolyte solution to be impregnated therein.

The cathode 100 may include a cathode current collector 105 and a cathode active material layer 110 formed on at least one surface of the cathode current collector 105. The cathode active material layer 110 may include cathode active material particles as the active material particles 65.

The anode 130 may include an anode current collector 125 and an anode active material layer 120 formed on at least one surface of the anode current collector 125. The anode active material layer 120 may include anode active material particles as the active material particles 65.

At least one of the cathode 100 and the anode 130 may include the electrode for a secondary battery including the protective coating 70 as described with reference to FIGS. 1 to 4. In some embodiments, the above-described electrode for a secondary battery may be applied to the anode 130 to enhance lithium mobility in the anode active material layer and block the oxidation/reduction side reactions due to electron transfer with the electrolyte solution.

In some embodiments, the above-described electrode for a secondary battery may be applied to each of the cathode 100 and the anode 130.

The separator 140 may be interposed between the cathode 100 and the anode 130. The separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, or the like.

The porous non-woven fabric may include a high-melting-point glass fiber, a polyethylene terephthalate fiber, or the like. The separator 140 may also include a ceramic-based material. For example, inorganic particles may be coated on a polymer film or dispersed in the polymer film to improve heat resistance.

In example embodiments, an electrode cell may be defined by the cathode 100, the anode 130 and the separator 140, and a plurality of the electrode cells may be stacked to form, e.g., the electrode assembly 150. The electrode assembly 150 may have a structure of a winding type, a stacking type, a z-folding type, or a stack-folding type.

The electrode assembly 150 may be accommodated in the case 160 together with an electrolyte solution, so that the lithium secondary battery may be defined. In example embodiments, a non-aqueous electrolyte solution may be used as the electrolyte solution.

The non-aqueous electrolyte solution may include a lithium salt as an electrolyte, and an organic solvent. The lithium salt may be represented by, e.g., Li⁺X⁻, and examples of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like..

The organic solvent may include, e.g., propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 5, an electrode tab (a cathode tab and an anode tab) may protrude from each of the cathode current collector 105 and the anode current collector 125 included in each electrode cell, and extend to one end portion of the case 160. The electrode tabs may be fused together with the one end portion of the case 160 and be connected to electrode leads (a cathode lead (107) and an anode lead (127)) that may extend or be exposed to an outside of the case 160.

Although FIG. 5 illustrates that the cathode lead 107 and the anode lead 127 protrude from an upper side of the case 160 in a plan view, positions of the electrode leads are not limited thereto. For example, the electrode leads may protrude from at least one of both side surfaces of the case 160, or may protrude from a lower side of the case 160. Alternatively, the cathode lead 107 and the anode lead 127 may be formed to protrude from different sides of the case 160.

The lithium secondary battery may be fabricated in, e.g., a cylindrical type using a can, a prismatic type, a pouch type, or a coin type.

The present disclosure includes the following numbered aspects:
Aspect 1: An electrode for a secondary battery, comprising: a current collector; an active material layer on the current collector, the active material layer comprising an active material; and a protective coating covering at least a portion of a surface of the active material or at least a portion of a surface of the active material layer, and comprising an aryl-ring-containing metal compound.
Aspect 2: The electrode for a secondary battery according to aspect 1, wherein the protective coating comprises a compound represented by Structural Formula 1:

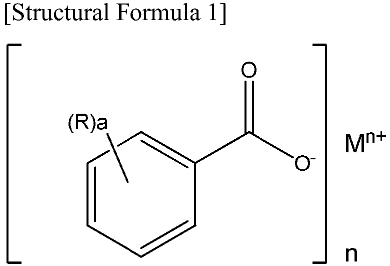

   wherein, in Structural Formula 1, R is hydrogen, deuterium, -F, -Cl, -Br, -I, a hydroxyl group, a cyano group, a nitro group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₆₀ carbocyclic group, a substituted or unsubstituted C₁-C₆₀ heterocyclic group, a substituted or unsubstituted C₆-C₆₀ aryloxy group, a substituted or unsubstituted C₆-C₆₀ arylthio group, a substituted or unsubstituted C₇-C₆₀ arylalkyl group, or a substituted or unsubstituted C₂-C₆₀ heteroarylalkyl group.
Aspect 3: The electrode for a secondary battery according to aspect 2, wherein in Structural Formula 1, M is an alkali metal or an alkaline earth metal, and n is 1 or 2.
Aspect 4: The electrode for a secondary battery according to any one of aspects 1 to 3, wherein the active material layer further comprises a binder, and the protective coating at least partially covers surfaces of the active material and the binder exposed on an outer surface of the active material layer.
Aspect 5: The electrode for a secondary battery according to any one of aspects 1 to 4, wherein the protective coating is also present at an inside of the active material layer on a surface of the active material.
Aspect 6: The electrode for a secondary battery according to aspect 5, wherein the protective coating comprises a first protective coating covering an outer surface of the active material layer, and a second protective coating covering the surface of the active material.
Aspect 7: The electrode for a secondary battery according to aspect 6, wherein the first protective coating and the second protective coating are merged with each other at an outer portion of the active material layer.
Aspect 8: The electrode for a secondary battery according to any one of aspects 1 to 7, wherein the protective coating is in contact with a surface of the current collector.
Aspect 9: The electrode for a secondary battery according to any one of aspects 1 to 8, wherein, in a ¹H-NMR spectrum of a solution in which components of the protective coating is eluted from the electrode for a secondary battery, a multiplet peak in a range of 7.2 to 7.4 ppm and a doublet peak in a range of 7.6 to 7.7 ppm are observed.
Aspect 10: A secondary battery, comprising: a cathode; and an anode opposing the cathode, wherein at least one of the cathode and the anode comprises the electrode for a secondary battery of any one of aspects 1 to 9.
Aspect 11: A method of fabricating an electrode for a secondary battery, comprising: preparing a current collector; and forming an active material layer that comprises an active material and a protective coating including an aryl-ring-containing metal compound on the current collector, wherein the forming the active material layer comprises forming the protective coating on an outer surface of the active material layer, or forming the protective coating on a surface of the active material.
Aspect 12: The method of fabricating an electrode for a secondary battery according to aspect 11, wherein the forming the protective coating on the outer surface of the active material layer comprises immersing the active material layer coated on the current collector in a coating solution including the aryl-ring-containing metal compound.
Aspect 13: The method of fabricating an electrode for a secondary battery according to aspect 11, wherein the forming the protective coating on the surface of the active material comprises mixing the active material in a coating solution including the aryl-ring-containing metal compound before coating the active material on the current collector.
Aspect 14: The method of fabricating an electrode for a secondary battery according to aspect 13, wherein the mixing the active material in the coating solution is performed together with a vacuum drying.
Aspect 15: The method of fabricating an electrode for a secondary battery according to any one of aspects 12 to 14, wherein a concentration of the aryl-ring-containing metal compound in the coating solution is 0.1 wt% or more, and less than 10 wt%.

### Example 1

Cathode active material particles including LiNi_{0.8}Co_{0.1}Mn_{0.1}O₂ as a cathode active material, Denka Black as a conductive agent, and PVDF as a binder were mixed in a mass ratio of 97:2:1, respectively, to prepare a cathode mixture. The cathode mixture was coated on an aluminum current collector, and then dried and pressed to fabricate a cathode.

An anode slurry including 93 wt% of natural graphite particles as an anode active material, 5 wt% of KS6 as a flake type conductive material, 1 wt% of styrene-butadiene rubber (SBR) as a binder, and 1 wt% of carboxymethyl cellulose (CMC) as a thickener was prepared. The anode slurry was coated on a copper substrate, dried, and pressed to fabricate an anode.

The cathode and the anode were immersed for about 10 seconds in an ethanol solution in which sodium benzoate was dissolved at a concentration of 1 wt%, and then taken out and dried in a convection oven at 60 °C to form a protective coating on a surface of an active material layer.

The cathode and the anode fabricated as described above were notched to a predetermined size, and stacked with a separator (polyethylene, thickness: 15 µm) interposed between the cathode and the anode to form an electrode cell. The tab portions of the cathode and the anode were welded. The welded assembly of the cathode/separator/anode was placed in a pouch, and three sides excluding an electrolyte an injection side were sealed. A portion with the electrode tabs was included in the sealing portion. An electrolyte solution was injected through the electrolyte injection side, the electrolyte injection side was also sealed, and then impregnation proceeded for 12 hours or more. Thereafter, formation charge/discharge was performed (charging conditions: CC-CV, 0.25C, 4.2V, 0.05C, CUT-OFF; discharging conditions: CC, 0.25C, 2.5V, CUT-OFF).

In a preparation of the electrolyte solution, a 1M LiPF₆ solution was prepared using a mixed solvent of EC/EMC (30/70; volume ratio), and 1 wt% of vinylene carbonate (VC), 0.5 wt% of 1,3-propanesultone (PRS), and 0.5 wt% of lithium bis(oxalato)borate (LiBOB) were added.

### Example 2

A secondary battery was fabricated by the same method as that in Example 1, except that the protective coating was formed on the cathode active material particles and the anode active material particles instead of forming the protective coating after fabricating the active material layer, and then the cathode and the anode were fabricated.

Specifically, the cathode active material particles and the anode active material particles were each mixed with an NMP solution having a sodium benzoate concentration of 1 wt%, and an aqueous solution having a sodium benzoate concentration of 1 wt% in a planetary mixer. After adjusting a solid content of the solution in the mixer to 50 wt%, stirring/mixing was performed while performing a vacuum drying using a vacuum line.

### Example 3

A secondary battery was fabricated by the same method as that in Example 1, except that the sodium benzoate concentration of the coating solution was increased to 10 wt%.

### Example 4

A secondary battery was fabricated by the same method as that in example 1, except that the sodium benzoate concentration of the coating solution was decreased to 0.09 wt%.

### Example 5

A secondary battery was fabricated by the same method as that in Example 1, except that magnesium benzoate was used as a coating material.

### Example 6

A secondary battery was fabricated by the same method as that in Example 1, except that lithium benzoate was used as a coating material.

### Comparative Example 1

A secondary battery was fabricated by the same method as that in Example 1, except that the formation of the protective coating was omitted.

### Comparative Example 2

A secondary battery was fabricated by the same method as that in Example 1, except that lithium bis(oxalato)borate (LiBOB) was used as the coating material included in the coating solution.

### Comparative Example 3

A secondary battery was fabricated by the same method as that in Example 1, except that NaCl was used as the coating material included in the coating solution.

### Evaluation Example

### (1) ¹H NMR analysis of protective coating

After the formation charge/discharge of the secondary batteries of Example 1 and Comparative Example 1, the anode was separated from the secondary battery, immersed in DMC (dimethyl carbonate) for 3 days, and then dried. After scraping off the active material layer from the dried anode, a sample solution was prepared by mixing with D₂O in a weight ratio of 1:2. The sample solution was stirred for 1 day to elute components of the protective coating, and then filtered through a syringe filter to obtain a measurement solution.

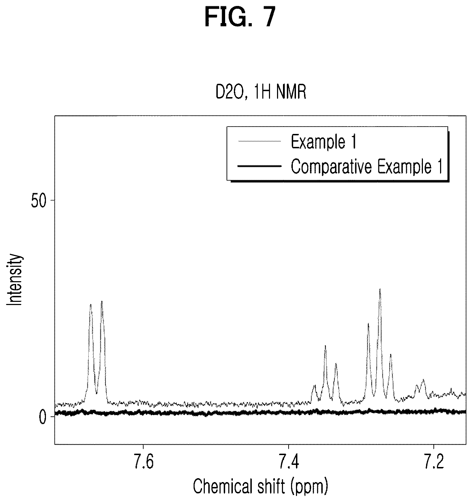

FIG. 7 is a graph of ¹H NMR analysis measured from the anode components of Example 1 and Comparative Example 1.

Referring to FIG. 7, in the ¹H-NMR spectrum of Example 1, multiplet peaks were observed in a range of 7.2 to 7.4 ppm, and a doublet peak was observed in a range of 7.6 to 7.7 ppm.

### (2) Evaluation on high-rate charging properties

The secondary batteries fabricated in Examples and Comparative Examples were subjected to 200 repeated cycles of a step charging (CC/CV charging 4.2V 0.05C cut) at a C-rate of 1.25C/1.0C/0.75C/0.5C and discharging at 1/3C (CC discharging 2.5V cut) at room temperature within a DOD72% (SOC8%-80%) range. A rest time of 10 minutes was provided between each of the cycles. After 200 cycles, a charge capacity retention relative to a discharge capacity in an initial cycle was measured.

### (3) DC-IR evaluation

The secondary battery was charged (0.3C CC/CV charging, 4.2V, 0.05C cut) at a temperature of 25°C, rested for 10 minutes, and discharged (0.3C CC discharging, SOC50% cut). The battery was rested for 1 hour at SOC50%, discharged at 1C for 10 seconds, and then rested again for 10 seconds. A discharge resistance (DC-IR) at SOC50% was calculated by dividing a difference between a voltage after resting for 1 hour at SOC50% and a voltage after the end of the 10-second 1C discharge by a current value of 1C.

The evaluation results are shown in Table 1 below.

**[Table 1]**

| | high-rate charging property (%) | DC-IR (mΩ) |
|---|---|---|
| Example 1 | 90 | 3.8 |
| Example 2 | 91 | 3.8 |
| Example 3 | 88 | 4.2 |
| Example 4 | 87 | 3.7 |
| Example 5 | 91 | 4.0 |
| Example 6 | 85 | 4.0 |
| Comparative Example 1 | 82 | 3.7 |
| Comparative Example 2 | 84 | 3.9 |
| Comparative Example 3 | 83 | 4.0 |

Referring to Table 1, in Examples in which the protective coating including the aryl-ring-containing metal compound was formed, improved high-rate charging capacity retention and low discharge resistance were provided.

In Example 3 in which the concentration of the coating material in the coating solution was increased, the discharge resistance was slightly increased due to an increase in a coating thickness. In Example 4 in which the concentration of the coating material in the coating solution was decreased, the high-rate charging stability was degraded compared to that of Example 1.

In Comparative Examples in which the protective coating was omitted, or an aryl group-free organic material or an inorganic material was coated, the high-rate charging capacity retention was significantly decreased compared to those from Examples.

In Example 6 in which lithium benzoate was used as a coating material, the high-rate charging stability was decreased and the discharge resistance was also increased compared to those from Example 1 in which sodium benzoate was used.

## Claims

1. An electrode for a secondary battery, comprising:
a current collector;
an active material layer on the current collector, the active material layer comprising an active material; and
a protective coating covering at least a portion of a surface of the active material or at least a portion of a surface of the active material layer, and comprising an aryl-ring-containing metal compound.

2. The electrode for a secondary battery according to claim 1, wherein the protective coating comprises a compound represented by Structural Formula 1: 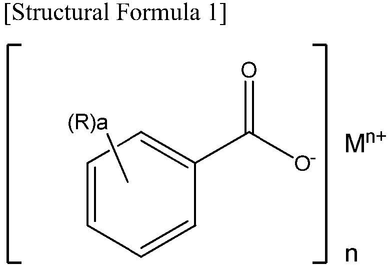 wherein, in Structural Formula 1, R is hydrogen, deuterium, -F, -Cl, -Br, -I, a hydroxyl group, a cyano group, a nitro group, a substituted or unsubstituted C₁-C₆₀ alkyl group, a substituted or unsubstituted C₂-C₆₀ alkenyl group, a substituted or unsubstituted C₂-C₆₀ alkynyl group, a substituted or unsubstituted C₁-C₆₀ alkoxy group, a substituted or unsubstituted C₃-C₆₀ carbocyclic group, a substituted or unsubstituted C₁-C₆₀ heterocyclic group, a substituted or unsubstituted C₆-C₆₀ aryloxy group, a substituted or unsubstituted C₆-C₆₀ arylthio group, a substituted or unsubstituted C₇-C₆₀ arylalkyl group, or a substituted or unsubstituted C₂-C₆₀ heteroarylalkyl group.

3. The electrode for a secondary battery according to claim 2, wherein in Structural Formula 1, M is an alkali metal or an alkaline earth metal, and n is 1 or 2.

4. The electrode for a secondary battery according to any one of claims 1 to 3, wherein the active material layer further comprises a binder, and the protective coating at least partially covers surfaces of the active material and the binder exposed on an outer surface of the active material layer.

5. The electrode for a secondary battery according to any one of claims 1 to 4, wherein the protective coating is also present at an inside of the active material layer on a surface of the active material.

6. The electrode for a secondary battery according to claim 5, wherein the protective coating comprises a first protective coating covering an outer surface of the active material layer, and a second protective coating covering the surface of the active material.

7. The electrode for a secondary battery according to claim 6, wherein the first protective coating and the second protective coating are merged with each other at an outer portion of the active material layer.

8. The electrode for a secondary battery according to any one of claims 1 to 7, wherein the protective coating is in contact with a surface of the current collector.

9. The electrode for a secondary battery according to any one of claims 1 to 8, wherein, in a ¹H-NMR spectrum of a solution in which components of the protective coating is eluted from the electrode for a secondary battery, a multiplet peak in a range of 7.2 to 7.4 ppm and a doublet peak in a range of 7.6 to 7.7 ppm are observed.

10. A secondary battery, comprising:
a cathode; and
an anode opposing the cathode,
wherein at least one of the cathode and the anode comprises the electrode for a secondary battery of any one of claims 1 to 9.

11. A method of fabricating an electrode for a secondary battery, comprising:
preparing a current collector; and
forming an active material layer that comprises an active material and a protective coating including an aryl-ring-containing metal compound on the current collector,
wherein the forming the active material layer comprises forming the protective coating on an outer surface of the active material layer, or forming the protective coating on a surface of the active material.

12. The method of fabricating an electrode for a secondary battery according to claim 11, wherein the forming the protective coating on the outer surface of the active material layer comprises immersing the active material layer coated on the current collector in a coating solution including the aryl-ring-containing metal compound.

13. The method of fabricating an electrode for a secondary battery according to claim 11, wherein the forming the protective coating on the surface of the active material comprises mixing the active material in a coating solution including the aryl-ring-containing metal compound before coating the active material on the current collector.

14. The method of fabricating an electrode for a secondary battery according to claim 13, wherein the mixing the active material in the coating solution is performed together with a vacuum drying.

15. The method of fabricating an electrode for a secondary battery according to any one of claims 12 to 14, wherein a concentration of the aryl-ring-containing metal compound in the coating solution is 0.1 wt% or more, and less than 10 wt%.
